# EUROPEAN PATENT SPECIFICATION

(11) **EP 3 517 851 B1**
(45) Date of publication and mention of the grant of the patent: **15.09.2021**
(21) Application number: 16916837.4
(22) Date of filing: 26.09.2016
(51) Int. Cl.: H02M 7/08, H02M 7/17, H02M 1/00, F24F 11/30, F24F 1/0003, F24F 3/06

(54) **AIR CONDITIONING DEVICE**
KLIMAANLAGE
DISPOSITIF DE CLIMATISATION

(43) Date of publication of application: 31.07.2019
(73) Proprietor: Toshiba Carrier Corporation, Kawasaki-shi, Kanagawa 212-8585 (JP)
(72) Inventor: MITSUMORI, Shinsuke, Fuji-shi Shizuoka 416-8521 (JP)
(74) Representative: Gramm, Lins & Partner Patent- und Rechtsanwälte PartGmbB
(86) International application number: PCT/JP2016/078286
(87) International publication number: WO 2018/055770

(56) References cited:
- EP-A2- 0 543 622
- EP-A2- 2 372 261
- JP-A- H0 370 943
- JP-A- H04 110 557
- JP-A- H08 216 657
- JP-A- H10 205 854
- JP-A- 2005 121 333
- KR-A- 20110 004 685

## Description

### Technical Field

Embodiments described herein relate generally to a multiple air conditioning apparatus provided with at least one outdoor unit and a plurality of indoor units.

### Background Art

A multiple air conditioning apparatus which is provided with a refrigeration cycle including a compressor, outdoor heat exchanger, a plurality of flow regulating valves, and a plurality of indoor heat exchangers, in which the compressor and outdoor heat exchanger are accommodated in an outdoor unit, and indoor heat exchangers and flow regulating valves are respectively accommodated in a plurality of indoor units is known. In each indoor unit, when the operation is in the on-state, by controlling the degree of opening (aperture) of the flow regulating valve, the flow rate of the refrigerant is regulated and, when the operation is in the off-state, the flow regulating valve is fully closed, whereby the circulation of the refrigerant is stopped.

The above-mentioned compressor accommodates therein a motor section and compression mechanism section together with lubricating oil. When the refrigerant is discharged from the compressor, part of the lubricating oil inside the compressor flows out of the compressor and flows into the refrigeration cycle together with the refrigerant. The lubricating oil which has flowed out of the compressor returns to the compressor through the outdoor heat exchanger, flow regulating valves, and indoor heat exchangers together with the refrigerant. However, when the operation of any one of the indoor units is in the off-state, part of the lubricating oil which has flowed out of the compressor and which has flowed into the refrigeration cycle is accumulated in the indoor units in some cases. In such a case, the lubricating oil inside the compressor tends to be short.

In order to prevent a shortage of the lubricating oil from occurring, the above-mentioned air conditioning apparatus periodically executes an oil recovery operation of returning the refrigerant discharged from the compressor to the compressor through all the indoor units as protection control of the refrigeration cycle. The protection control such as the oil recovery operation or the like is managed by the outdoor unit in a leading manner and, at the time of execution thereof, an instruction to that effect is issued from the outdoor unit to each indoor unit. Of the indoor units which have received the instruction, each of an indoor unit or indoor units out of operation causes the flow regulating valve in the fully closed state to carry out an operation of opening the flow regulating valve itself to a predetermined degree of opening to thereby circulate the refrigerant. By this circulation of the refrigerant, the lubricating oil which has been accumulated in the indoor unit during the operation dormant period returns to the compressor.

### Citation List

### Patent Literatures

Patent Literature 1: JP 4160884 B
Patent Literature 2: JP H04-263733 A
Patent Literature 3: EP 2 372 261 A2 discloses an air conditioner with a photovoltaic cell for converting photovoltaic energy into direct current power, an indoor unit for exchanging heat, and an outdoor unit for exchanging heat.
Patent Literature 4: KR 20110004685 A discloses an air conditioner that controls the use of direct current voltage by an auxiliary power supply when cut-off of a main power supply is detected.
Patent Literature 5: JP H08-216657 A discloses the power circuit of a car air conditioner wherein a second switch is provided to switch to a car mounted generator and to a commercial electric power source.
Patent Literature 6: JP H03-370943 A teaches how to inhibit emergency shutdown of a compressor due to high pressure by connecting a discharge pipe and a suction pipe of a compressor for an air conditioner, thus allowing bypass.
Patent Literature 7: EP 0 543 622 A2 discloses how to obtain desired maximum capacity of an air conditioner by using a combination of a plurality of outdoor units.

### Disclosure of Invention

There are areas in which it is made a practice (custom) or obligation to arrange circuit breakers in the power distribution paths between the AC power supply and indoor units, and subject a circuit breaker corresponding to an indoor unit out of operation to a breaker opening operation to thereby cut off supply of electric power to the indoor unit.

In such an area, even when an instruction to execute protection control such as an oil recovery operation or the like is issued from the outdoor unit to each indoor unit, in an indoor unit in which supply of electric power is cut off by the opening operation of the circuit breaker, it is not possible to execute the procedure necessary for the protection control.

An embodiment described herein aims to provide an air conditioning apparatus capable of executing a procedure necessary for protection control such as an oil recovery operation or the like even in an indoor unit in which supply of electric power is cut off.

An air conditioning apparatus of Claim 1 includes an outdoor unit, indoor units, and remote controllers. The outdoor unit accommodates therein a compressor and outdoor heat exchanger. The indoor unit accommodates therein a flow regulating valve, indoor heat exchanger, and indoor fan configured to pass the indoor air through the indoor heat exchanger. The remote controller is configured to set operating conditions, and is connected to the indoor unit. Further, the indoor unit includes a rectifier circuit configured to rectify an AC voltage supplied from a main power supply to the indoor unit through a circuit breaker, first power-supply lines to which an output voltage of the rectifier circuit is applied, DC output circuit configured to rectify an AC voltage supplied from an auxiliary power supply to the indoor unit and output a voltage lower than an output voltage of the rectifier circuit, second power-supply lines configured to guide an output voltage of the DC output circuit to the first power-supply lines, first drive circuit configured to drive the indoor fan by the voltage of the first power-supply lines, power circuit configured to create DC voltages of predetermined levels from the voltage of the first power-supply lines, second drive circuit configured to drive the flow regulating valve by the output voltage of the power circuit, and indoor controller operating by the output voltage of the power circuit and configured to control the first drive circuit and second drive circuit according to the operating conditions set by the remote controller and instruction from the outdoor unit, and carry out drive of the second drive circuit according to the instruction from the outdoor unit even when the output voltage of the rectifier circuit is zero. An outdoor controller is provided in the outdoor unit, connected to the indoor controllers through communication lines, and is configured to control the compressor according to an instruction from each of the indoor controllers based on the operating conditions to be set by the remote controllers.
Current detecting units are provided in each of the indoor units, each of which is configured to detect a current flowing from the second power-supply lines to the first power-supply lines.
Feed control switches are provided in each of the indoor units, each of which is configured to control feeding of electric power from the power circuits to the remote controllers, wherein the indoor controllers control the first drive circuits and the second drive circuits according to the operating conditions set by the remote controllers and an instruction from the outdoor controller, detect an opened/closed state of the circuit breakers from a detection result of the current detecting units.
When the detection result is "closed", the indoor controllers allow the first drive circuits to operate the indoor fans and turn on the feed control switches, and when the detection result is "opened", forbid the first drive circuits to operate the indoor fans and turn off the feed control switches.

### Brief Description of Drawings

FIG. 1 is a view showing the configuration of a heat pump refrigeration cycle in an embodiment.
FIG. 2 is a block diagram showing the electric wiring of an outdoor unit and each indoor unit of the embodiment.
FIG. 3 is a view showing an electric circuit of the indoor unit in the embodiment.
FIG. 4 is a flowchart showing the control of an outdoor controller in the embodiment.
FIG. 5 is a flowchart showing the control of an indoor controller in the embodiment.

### Best Mode for Carrying Out the Invention

An embodiment of the present invention will be described below with reference to the accompanying drawings.

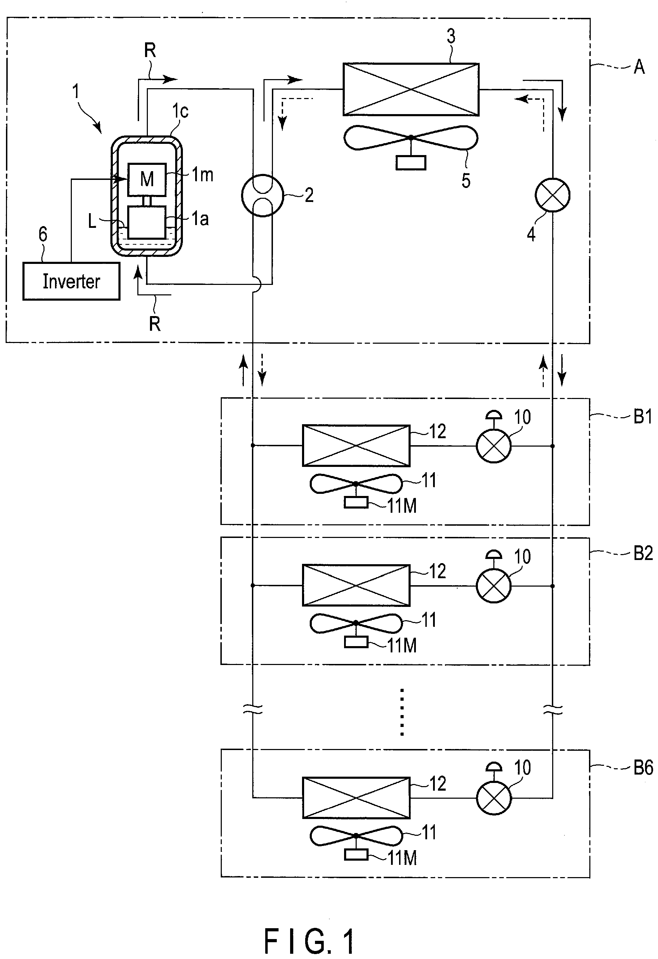

As shown in FIG. 1, to an outdoor unit A, a plurality of indoor units B1 to B6 are connected through piping. The outdoor unit A accommodates therein a compressor 1, four-way valve 2, outdoor heat exchanger 3, expansion valve 4, outdoor fan 5, inverter 6, and the like. Each of the indoor units B1 to B6 accommodates therein a flow regulating valve (PMV) 10, indoor fan 11, indoor heat exchanger 12, and the like. The indoor fan 11 is configured to pass the indoor air through the indoor heat exchanger 12.

The compressor 1 is a member formed by accommodating a compression mechanism section 1a and motor section 1m configured to drive a shaft of the compression mechanism section 1a in an airtight case 1c together with the lubricating oil L, and sucks the refrigerant R, compresses the refrigerant R, and discharges the compressed refrigerant R. The lubricating oil L lubricates the sliding part of the compression mechanism section 1a. It should be noted that if the lubricating oil L becomes short, there is a possibility of the sliding part of the compression mechanism section 1a abnormally generating heat to thereby lead to a failure such as seizure or the like.

The outdoor heat exchanger 3 is piping-connected to the discharge outlet of the compressor 1 through the four-way valve 2, and each indoor heat exchanger 12 is connected to the outdoor heat exchanger 3 through the expansion valve 4 and each flow regulating valve 10. Further, the suction opening of the compressor 1 is connected to these indoor heat exchangers 12 through the four-way valve 2. Each flow regulating valve 10 includes a pulse motor operating at a low DC voltage, and is a so-called pulse motor valve (PMV) in which the degree of opening continuously changes according to the number of drive pulses input thereto, requires a drive time of, for example, about 20 seconds to change respectively from the fully-closed state to the fully-opened state and from the fully-opened state to the fully-closed state and, after the drive, maintains the degree of opening thereof without applying drive pulses thereto.

The outdoor fan 5 sucks the outdoor air and sends the air to the outdoor heat exchanger 3. The inverter 6 converts the voltage of the three-phase or single-phase AC power supply to which the outdoor unit A is connected into a DC voltage, converts the DC voltage into an AC voltage of a predetermined frequency by switching, and outputs the AC voltage. By the output of this this inverter 6, the motor section 1m of the compressor 1 operates and the rotational speed (capacity of the compressor 1) of the motor section 1m changes according to the output frequency F of the inverter 6.

At the time of the cooling operation, as indicated by the solid arrows, the refrigerant R discharged from the compressor 1 flows into the outdoor heat exchanger 3 through the four-way valve 2, the refrigerant passing through the outdoor heat exchanger 3 flows into each indoor heat exchanger 12 through the expansion valve 4 and each flow regulating valve 10. The refrigerant passing through each indoor heat exchanger 12 is sucked into the compressor 1 through the four-way valve 2. By the flow of the refrigerant R, the outdoor heat exchanger 3 functions as a condenser (heat radiator), and each indoor heat exchanger 12 functions as an evaporator (heat absorber). At the time of the heating operation, the flow path of the four-way valve 2 is switched, whereby as indicated by the dashed arrows, the refrigerant R discharged from the compressor 1 flows into each indoor heat exchanger 12 through the four-way valve 2, the refrigerant passing through each indoor heat exchanger 12 flows into the outdoor heat exchanger 3 through the expansion valve 4. The refrigerant R passing through the outdoor heat exchanger 3 is sucked into the compressor 1 through the four-way valve 2. By the flow of the refrigerant R, each indoor heat exchanger 12 functions as a condenser, and the outdoor heat exchanger 3 functions as an evaporator.

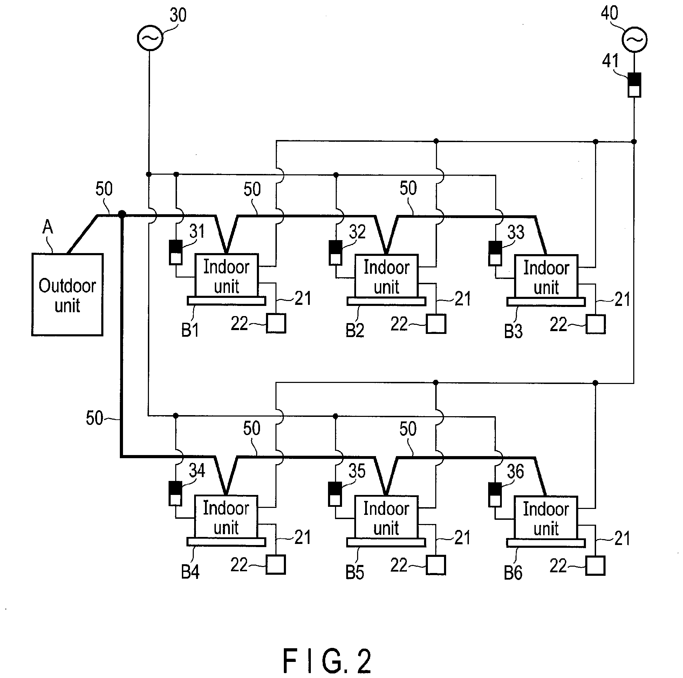

The air conditioning apparatus is constituted of the outdoor unit A and indoor units B1 to B6. The electric wiring of the outdoor unit A and indoor units B1 to B6 is shown in FIG. 2.

The supply terminals of the indoor unit B1 is wiring-connected to a main power supply (single-phase AC power supply) 30 through a circuit breaker (CB) 31. Likewise, the supply terminals of the indoor units B2 to B6 are respectively wiring-connected to the main power supply 30 through circuit breakers 32 to 36. Furthermore, the supply terminals of the indoor units B1 to B6 are wiring-connected to an auxiliary power supply (single-phase AC power supply) 40 through a circuit breaker 41. On the other hand, the outdoor unit A is connected to a three-phase AC power supply of an electric power system different from the main power supply 30 and auxiliary power supply 40 of the indoor units B1 to B6. Further, communication lines 50 are connected between the outdoor unit A and indoor units B1 to B6.

The main power supply 30 outputs an AC voltage of, for example, 200V to 240V. The circuit breakers 31 to 36 are configured to open to thereby cut off the power distribution path when an overcurrent flows, are respectively arranged at the installation locations of the indoor units B1 to B6, and their opening operations and closing operations can be carried out by the user. The auxiliary power supply 40 outputs an AC voltage of, for example, 50V. The circuit breaker 41 is configured to open to thereby cut off the power distribution path at the time of occurrence of an overcurrent, is arranged in a machine room of the building, outdoor electric service compartment or the like, and the opening operation and closing operation thereof can be carried out by the specialized workmen at the time of anomalous occurrence, at the time of inspection or the like, but a general user cannot touch the circuit breaker 41. It should be noticed that the main power supply 30 and auxiliary power supply 40 may be those derived from the same electric power system or may be those derived from electric power systems different from each other.

Cables 21 are respectively derived from the indoor units B1 to B6, and remote-control remote controllers 22 for setting of operating conditions (operation-on, operation-off, target indoor temperature, and the like) are connected to the cables 21. By the operations of these remote controllers 22, it is possible to selectively set operation-on and operation-off of the indoor units B1 to B6, and individually set the target indoor temperatures Ts of the installation locations of the indoor units B1 to B6.

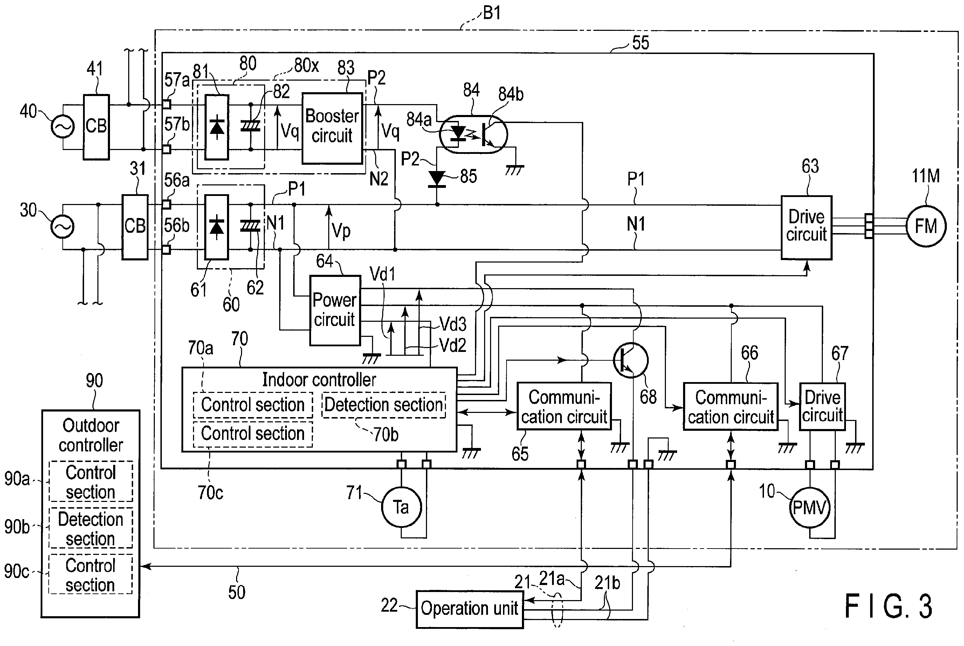

An electric circuit of the indoor unit B1 is shown in FIG. 3.

On a control board 55 accommodated in the indoor unit B1, a rectifier circuit 60, positive-side power-supply line (first power-supply line) P1, negative-side power-supply line (first power-supply line) N1, drive circuit (first drive circuit) 63, power circuit 64, communication circuits 65 and 66, drive circuit (first drive circuit) 67, feed control switch such as an NPN transistor 68, indoor controller 70, DC output circuit 80x, positive-side power-supply line (second power-supply line) P2, negative-side power-supply line (second power-supply line) N2, current detecting means such as a photo-coupler 84, and backflow prevention diode 85 are mounted.

Further, supply terminals 56a and 56b for connection to the main power supply, and supply terminals 57a and 57b for connection to the auxiliary power supply are prepared on the control board 55, the main power supply 30 is connected to the supply terminals 56a and 56b through the circuit breaker 31, and the auxiliary power supply 40 is connected to the supply terminals 57a and 57b through the circuit breaker 41. Each of the supply terminals 56a and 56b, and supply terminals 57a and 57b for connection to the auxiliary power supply is a screw-fixed terminal in which wiring is fixed by screwing of a screw.

Furthermore, connection terminals for connection to devices are prepared on the control board 55, and a motor (called an indoor fan motor) 11M of the indoor fan 11, flow regulating valve 10, indoor temperature sensor 71, and above-mentioned cable 21 (communication line 21a and a pair of power-supply lines 21b) are connected to these connection terminals.

The rectifier circuit 60 includes a diode bridge 61 and smoothing capacitor 62, and rectifies an AC voltage (200V to 240V) to be input thereto from the main power supply 30 through the circuit breaker 31 to a DC voltage Vp of, for example, 280V to 340V. This DC voltage Vp is applied to the positive-side power-supply line P1 and negative-side power-supply line N1. The drive circuit 63 operates by the DC voltage Vp of the power-supply lines P1 and N1, and drives the indoor fan motor 11M according to an instruction from the indoor controller 70.

The power circuit 64 is, for example, a DC/DC converter, and creates DC voltages Vd1, Vd2, and Vd3 of levels different from each other from the voltage (DC voltage Vp or DC voltage Vq) of the power-supply lines P1 and N1. The DC voltage Vd1 is, for example, 5V, DC voltage Vd2 is, for example, 12V, and DC voltage Vd3 is, for example, 20V (Vd1<Vd2<Vd3). Here, the power circuit 64 is contrived in such a manner as to be able to normally operate to create the DC voltages Vd1, Vd2, and Vd3 even when any one of the output voltage Vp of the rectifier circuit 61 to be described later and output voltage Vq (<Vp) of a booster circuit 83 is supplied thereto. The communication circuit 65 operates by the DC voltage Vd2 of the power circuit 64, and carries out data communication between the indoor controller 70 and the remote controller 22 establishing the communication line 21a of the cable 21. The communication circuit 66 operates by the DC voltage Vd2 of the power circuit 64, and carries out data communication between the indoor controller 70 and outdoor controller 90 through the communication line 50. The drive circuit 67 operates by the DC voltage Vd2 of the power circuit 64, and drives the flow regulating valve 10 according to an instruction from the indoor controller 70.

The NPN transistor 68 is configured to control power feeding from the power circuit 64 to the remote controller 22, the collector and emitter thereof are respectively connected to the output end of the DC voltage Vd3 of the power circuit 64 and power-supply line 21b of the cable 21, and the base thereof is connected to the control terminal of the indoor controller 70. The power-supply line 21b of the cable 21 supplies the DC voltage Vd3 led from the power circuit 64 to the remote controller 22 by turning-on of the NPN transistor 68. The remote controller 22 operates by this DC voltage Vd3.

The DC output circuit 80x includes a rectifier circuit 80 constituted of a diode bridge 81 and smoothing capacitor 82, and booster circuit 83. The rectifier circuit 80 rectifies the AC voltage (50V) input thereto from the auxiliary power supply 40 through the circuit breaker 41 to a DC voltage Vq. The booster circuit 83 boosts the DC voltage Vq of the rectifier circuit 80 to a voltage of a predetermined level (for example, 140V) lower than the DC voltage Vp (280V to 340V) of the rectifier circuit 60. The DC voltage Vp of the DC output circuit 80x is applied to the positive-side power-supply line P2 and negative-side power-supply line N2. These power-supply lines P2 and N2 are arranged from the output end of the DC output circuit 80x to the power-supply lines P1 and N1, and lead the DC voltage Vq of the DC output circuit 80x to the power-supply lines P1 and N1. The photo-coupler 84 is configured to detect a current flowing from the power-supply lines P2 and N2 to the power-supply lines P1 and N1, and includes a light-emitting diode 84a insertion-connected to the positive-side power-supply line P2, and phototransistor 84b to be turned on by the emission of light from the light-emitting diode 84a. A collector of the phototransistor 84b is connected to the control terminal of the indoor controller 70, and emitter of the phototransistor 84b is connected to the ground. A backflow prevention diode 85 is insertion-connected to the positive-side power-supply line P2 at a position on the downstream side of the connection position of the light-emitting diode 84a, and prevents a current from reversely flowing from the power-supply lines P1 and N1 to the power-supply lines P2 and N2.

When the circuit breaker 31 is in the closed state, the AC voltage of the main power supply 30 is rectified by the rectifier circuit 60, and the DC voltage Vp (280V to 340V) output from the rectifier circuit 60 is applied to the power-supply lines P1 and N1. On the other hand, when the circuit breaker 41 is in the closed state, the AC voltage of the auxiliary power supply 40 is rectified to the DC voltage Vq (about 70V=50×√2) by the rectifier circuit 80 of the DC output circuit 80x, the DC voltage is boosted to 140V about twice the DC voltage by the booster circuit 83 of the DC output circuit 80x, and is then applied to the power-supply lines P2 and N2. In this case, the DC voltage Vp of the power-supply lines P1 and N1 on the main power supply 30 side is on the higher level than the DC voltage Vq of the power-supply lines P2 and N2 on the auxiliary power supply 40 side. Accordingly, the drive circuit 63 and power circuit 64 operate by the DC voltage Vp of the power-supply lines P1 and N1 on the main power supply 30 side. No current flows from the power-supply lines P2 and N2 on the auxiliary power supply 40 side toward the power-supply lines P1 and N1 on the main power supply 30 side, and hence the phototransistor 84b of the photo-coupler 84 maintains the off-state.

If the circuit breaker 31 is subjected to an opening operation by the user, supply of electric power from the main power supply 30 to the indoor unit B1 is cut off, and hence the DC voltage Vp output from the rectifier circuit 60 becomes zero. On the other hand, the circuit breaker 41 is in the closed state, and hence the DC voltage Vq boosted by the booster circuit 83 is applied to the power-supply lines P2 and N2. This DC voltage Vq is higher in voltage than the DC voltage (zero level) Vp of the power-supply lines P1 and N1. Accordingly, the DC voltage Vq of the power-supply lines P2 and N2 on the auxiliary power supply 40 side is applied to the drive circuit 63 and power circuit 64 through the power-supply lines P1 and N1. As described above, the DC voltage Vq boosted by the booster circuit 83 is set lower than the DC voltage Vp output from the rectifier circuit 60 connected to the main power supply 30, and hence while the main power supply 30 is connected to the rectifier circuit 60, electric power is supplied from the main power supply 30 to the power-supply lines P1 and N1. On the other hand, when the circuit breaker 41 is opened, electric power is supplied to the power-supply lines P1 and N1 from the auxiliary power supply 40 side, and a relay or the like is not necessary for this switchover of power supply.

The drive circuit 63 and power circuit 64 operate by the DC voltage Vq of the power-supply lines P2 and N2 on the auxiliary power supply 40 side. Concomitantly with this, a current flows from the power-supply lines P2 and N2 toward the power-supply lines P1 and N1, and hence the phototransistor 84b of the photo-coupler 84 is turned on.

The outdoor controller 90 of the outdoor unit A is constituted of a microcomputer and peripheral circuits thereof, and includes control sections 90a to 90c as main functions based on a control program stored in the internal memory.

The control section 90a controls the operation of the compressor 1, operation of the outdoor fan 5, output frequency F of the inverter 6, and flow path of the four-way valve 2 according to an instruction from each indoor controller 70.

The control section 90b periodically executes the oil recovery operation (protection control of the refrigeration cycle) for returning the lubricating oil L which has flowed out of the compressor 1 and has flowed into the heat pump refrigeration cycle during the operation-on period of the compressor 1 to the compressor 1. This oil recovery operation is an operation of returning the refrigerant R discharged from the compressor 1 through the four-way valve 2, outdoor heat exchanger 3, each flow regulating valve 10, each indoor heat exchanger 12, and four-way valve 2, and the flow direction of the refrigerant R becomes identical to that at the time of cooling.

The control section 90c instructs the indoor units B1 to B6 to start and terminate the oil recovery operation.

The indoor controller 70 is constituted of a microcomputer and peripheral circuits thereof, operates by the DC voltage Vd1 of the power circuit 64, and is configured to control the flow regulating valve 10 and outdoor fan 11 of the indoor unit B1 according to the operating conditions set by the remote controller 22 and instruction from the outdoor controller 90, and includes a control section 70a, detection section 70b, and control section 70c as main functions based on the control program stored in the internal memory.

The control section 70a instructs the outdoor controller 90 about the operating conditions set by the remote controller 22, and controls the drive circuits 63 and 67 according to the operating conditions and instruction from the outdoor controller 90. More specifically, when the operation of the indoor unit B1 is in the on-state, the control section 70a transmits a difference between the target indoor temperature set by the remote controller 22 and sensed temperature of the indoor temperature sensor 71 to the outdoor controller 90 as the air-conditioning load, controls the degree of opening of the flow regulating valve 10 on the basis of an instruction concerning the degree of opening received from the outdoor controller 90 according to the air-conditioning load, and makes the indoor fan motor 11M operate. Further, when the operation of the indoor unit B1 is in the off-state, the control section 70a transmits a notice to that effect to the outdoor controller 90, fully closes the flow regulating valve 10, and stops the indoor fan motor 11M. Furthermore, when the operation of the indoor unit B1 is in the off-state, upon receipt of an instruction to start the oil recovery operation from the outdoor controller 90, the control section 70a opens the flow regulating valve 10 to a predetermined degree of opening (for example, fully opened state) and, upon receipt of an instruction to terminate the oil recovery operation from the outdoor controller 90, the control section 70a closes the flow regulating valve 10.

The detection section 70b detects the opened/closed state of the circuit breaker 31 according to the on/off-state of the phototransistor 84b of the photo-coupler 84. More specifically, when the phototransistor 84b is in the off-state, the detection section 70b determines that the circuit breaker 31 is in the closed state and, when the phototransistor 84b is in the on-state, the detection section 70b determines that the circuit breaker 31 is in the opened state.

When the detection result of the detection section 70b is "closed", the control section 70c allows the drive circuit 63 to operate the indoor fan motor 11M, and turns on the NPN transistor 68 to thereby execute feeding of electric power from the power circuit 64 to the remote controller 22. Further, when the detection result of the detection section 70b is "opened", the control section 70c forbids the drive circuit 63 to operate the indoor fan motor 11M, and turns off the NPN transistor 68 to thereby stop feeding of electric power from the power circuit 64 to the remote controller 22.

The electric circuit of each of the other indoor units B2 to B6 has a configuration identical to the electric circuit of the indoor unit B1.

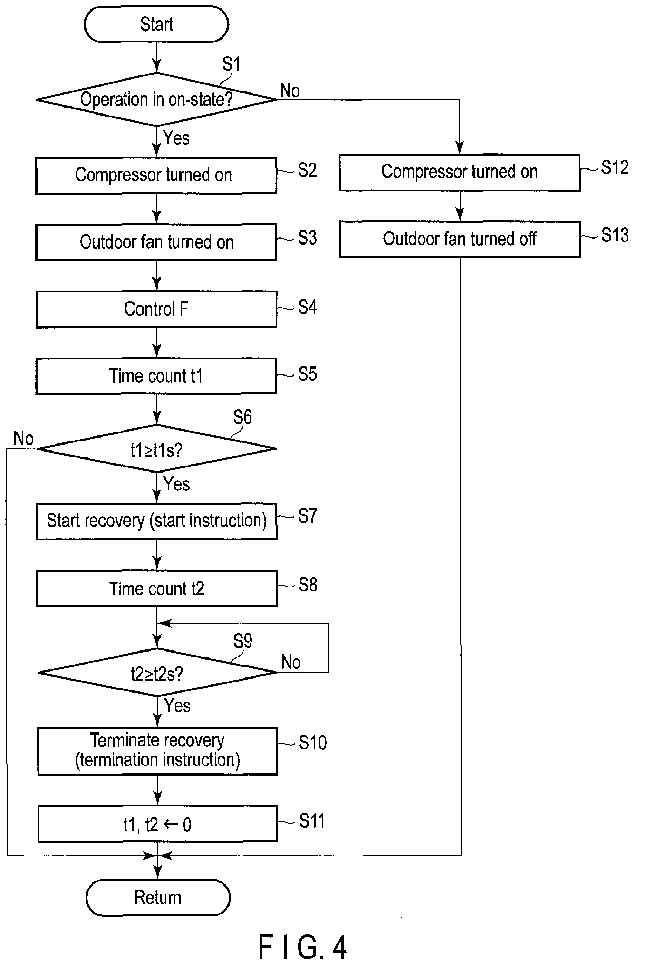

Next, the control to be executed by the outdoor controller 70 of the outdoor unit A will be described below with reference to the flowchart of FIG. 4.

When the operation of at least one of the indoor units B1 to B6 is in the on-state (YES of step S1), the outdoor controller 70 drives the inverter 6 to thereby bring the operation of the compressor 1 to the on-state (step S2), and brings the operation of the outdoor fan 5 to the on-state (step S3). Then, the outdoor controller 70 controls the output frequency F of the inverter 6 according to the sum total of the air-conditioning loads of the indoor units B1 to B6 (step S4), and instructs the indoor units B1 to B6 in operation (on-state) about the degree of opening of each flow regulating valve 10. Subsequently, the outdoor controller 70 starts time count t1 (step S5), and compares the time count t1 and the set time t1s with each other (step S6). The time count t1 is an integrated value of time during which the compressor 1 is continuously in operation.

When the time count t1 is less than the set time t1s (NO of step S6), the outdoor controller 70 repeats the processing from step S1. When the time count t1 reaches the set time t1s (YES of step S6), the outdoor controller 70 starts the oil recovery operation, and instructs the indoor units B1 to B6 about a notice to the effect that the oil recovery operation is started (step S7). Concomitantly with the start of the oil recovery operation, the outdoor controller 70 starts time count t2 (step S8), and compares the time count 2 and set time t2s with each other (step S9). The time count t2 is the duration time of the oil recovery operation.

When the time count t2 is less than the set time t2s (NO of step S9), the outdoor controller 70 enters the standby state as it is. When the time count t2 reaches the set time t2s (YES of step S9), the outdoor controller 70 terminates the oil recovery operation, and instructs the indoor units B1 to B6 about a notice to the effect that the oil recovery operation is terminated (step S10). Concomitantly with the termination of the oil recovery operation, the outdoor controller 70 clears the time count t1, and time count t2 to zero (step S11). Then, the outdoor controller 70 repeats the processing from step S1.

When the operations of all the indoor units B1 to B6 are in the off-state (NO of step S1), the outdoor controller 70 stops the inverter 6 to bring the operation of the compressor 1 to the off-state (step S12), and brings the operation of the outdoor fan 5 to the off-state (step S13). Then, the outdoor controller 90 returns to step S1 to monitor entering the on-state of the operations of the indoor units B1 to B6.

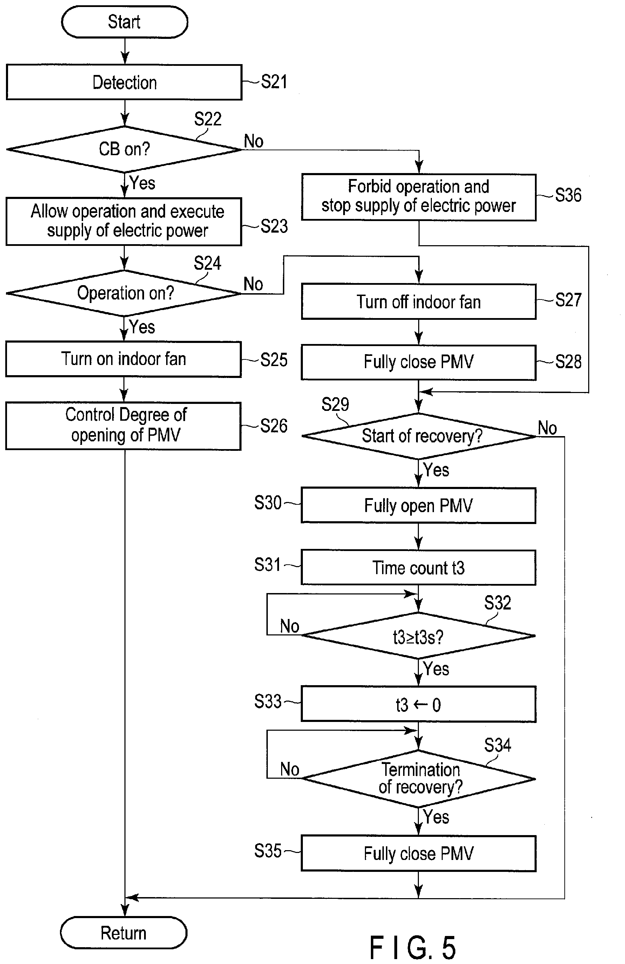

On the other hand, the indoor controller 70 of the indoor unit B1 executes the control shown in the flowchart of FIG. 5.

The indoor controller 70 detects the opened/closed state of the circuit breaker 31 according to the on/off-state of the phototransistor 84b of the photo-coupler 84 (step S21). When the circuit breaker 31 is in the closed state, the level of the DC voltage Vp of the power-supply lines P1 and N1 on the main power supply 30 side is higher than the level of the DC voltage Vq of the power supply-lines P2 and N2 on the auxiliary power supply 40 side, and hence a flow of a current from the power supply-lines P2 and N2 to the power supply-lines P1 and N1 does not occur. In this case, the indoor controller 70 operates by the DC voltage Vp of the power supply-lines P1 and N1. Then, the phototransistor 84b of the photo-coupler 84 is in the off-state, and thus the indoor controller 70 determines that the circuit breaker 31 is in the closed state.

Upon determination that the circuit breaker 31 is in the closed state (YES of step S22), the indoor controller 70 allows the indoor fan motor 11M to operate, and turns on the NPN transistor 68 to execute feeding of electric power from the power circuit 64 to the operation unit 22 (step S23). By this feeding of electric power, the operation unit 22 operates, and it becomes possible to set the operating conditions by the remote controller 22. Subsequently, the indoor controller 70 monitors designation of a start of the operation using the remote controller 22 (step S24).

When a start of the operation is designated by the remote controller 22 (YES of step S24), the indoor controller 70 brings the operation of the indoor fan 11 to the on-state by means of the drive circuit 63 (step S25), carries out communication with the outdoor controller 90 of the outdoor unit, and controls the degree of opening of the flow regulating valve 10 according to an instruction sent thereto from the outdoor controller 90 on the basis of the air-conditioning load sent from the indoor unit B1 to the outdoor controller 90 (step S26). When the off-state of the operation is designated by using the remote controller 22 (NO of step S24), the indoor controller 70 brings the operation of the indoor fan 11 to the off-state (step S27), and fully closes the flow regulating valve 10 (step S28). Then, the indoor controller 70 monitors an instruction to start the oil recovery operation from the outdoor unit A (step S29). When no instruction to start the oil recovery operation is received (NO of step S29), the indoor controller 70 repeats the processing from step S21 at the beginning.

Upon receipt of an instruction to start the oil recovery operation (YES of step S29), the indoor controller 70 fully opens the flow regulating valve 10 (step S30). In this case, the flow regulating valve 10 operates from the fully closed state to the fully opened state by the DC voltage Vd1 created by the power circuit 64 on the basis of the DC voltage Vp of the power-supply lines P1 and N1 on the main power supply 30 side. In this manner, the flow regulating valve 10 fully opens, whereby the refrigerant R flows through the indoor heat exchanger 12 of the indoor unit B1 out of operation. Concomitantly with the flow of the refrigerant R, the lubricating oil L accumulated in the indoor heat exchanger 12 is collected into the compressor 1.

Concomitantly with the full admission of the flow regulating valve 10, the indoor controller 70 starts time count t3 (step S31), and compares the time count t3 and set time t3s with each other (step S32). When the time count t3 is less than the set time t3s (NO of step S32), the indoor controller 70 enters the standby state as it is.

When the time count t3 reaches the set time t3s (YES of step S32), the indoor controller 70 clears the time count t3 to zero (step S33), and monitors an instruction to terminate the oil recovery operation from the outdoor unit A (step S34). When no instruction to terminate the oil recovery operation is received (NO of step S34), the indoor controller 70 enters the standby state as it is.

When an instruction to terminate the oil recovery operation is received (YES of step S34), the indoor controller 70 fully closes the flow regulating valve 10 (step S35). In this case, the flow regulating valve 10 operates from the fully opened state to the fully closed state by the DC voltage Vd1 created by the power circuit 64 on the basis of the DC voltage Vp of the power-supply lines P1 and N1 on the main power supply 30 side.

On the other hand, in areas in which it is made a practice or obligation to subject a circuit breaker corresponding to an indoor unit out of operation to a breaker opening operation to thereby cut off supply of electric power to the indoor unit, when bringing the operation of the indoor unit B1 to the off-state for a long period, the user carries out the opening operation of the circuit breaker 31 corresponding to the indoor unit B1.

When the circuit breaker 31 is opened, the DC voltage Vp of the power-supply lines P1 and N1 on the main power supply 30 side becomes zero, and hence the DC voltage Vq of the power-supply lines P2 and N2 on the auxiliary power supply 40 side is applied to the drive circuit 63 and power circuit 64 through the power-supply lines P1 and N1. Concomitantly with this, the phototransistor 84b of the photo-coupler 84 is turned on. The indoor controller 70 determines that the circuit breaker 31 is in the opened state on the basis of the on-state of the phototransistor 84b.

Upon determination that the circuit breaker 31 is in the opened state (NO of step S22), the indoor controller 70 forbids the operation of the indoor fan motor 11M, and turns off the NPN transistor 68 to thereby stop feeding of electric power from the power circuit 64 to the remote controller 22 (step S36). By the stop of feeding of electric power, the operation of the remote controller 22 is stopped, and it becomes impossible to set the operating conditions by means of the remote controller 22. Subsequently, the indoor controller 70 monitors an instruction to start the oil recovery operation to be issued from the outdoor unit A (step S29) .

Upon receipt of an instruction to start the oil recovery operation (YES of step S29), the indoor controller 70 fully opens the flow regulating valve 10 (step S30). In this case, the flow regulating valve 10 operates from the fully closed state to the fully opened state by the DC voltage Vd1 created by the power circuit 64 on the basis the DC voltage Vq of the power-supply lines P2 and N2 on the auxiliary power supply 40 side. The flow regulating valve 10 opens in this manner, whereby the refrigerant R flows through the indoor heat exchanger 12 of the indoor unit B1 out of operation. Concomitantly with the flow of the refrigerant R, the lubricating oil L accumulated in the indoor heat exchanger 12 is collected into the compressor 1.

Concomitantly with the full admission of the flow regulating valve 10, the indoor controller 70 starts time count t3 (step S31), and compares the time count t3 and set time t3s with each other (step S32). When the time count t3 is less than the set time t3s (NO of step S32), the indoor controller 70 enters the standby state as it is.

When the time count t3 reaches the set time t3s (YES of step S32), the indoor controller 70 clears the time count t3 to zero (step S33), and monitors an instruction to terminate the oil recovery operation from the outdoor unit A (step S34). When no instruction to terminate the oil recovery operation is received (NO of step S34), the indoor controller 70 enters the standby state as it is.

When an instruction to terminate the oil recovery operation is received (YES of step S34), the indoor controller 70 fully closes the flow regulating valve 10 (step S35). In this case, the flow regulating valve 10 operates from the fully opened state to the fully closed state by the DC voltage Vd1 created by the power circuit 64 on the basis of the DC voltage Vq of the power-supply lines P2 and N2 on the auxiliary power supply 40 side.

As described above, even when supply of electric power to the indoor unit B1 out of operation is cut off by the opening operation of the circuit breaker 31, it is possible to make the indoor controller 70 and flow regulating valve 10 operate by the DC voltage Vq of the power-supply lines P2 and N2 on the auxiliary power supply 40 side. Accordingly, it possible to securely execute the procedure (fully opening of the flow regulating valve 10) necessary for the oil recovery operation to be carried out according to an instruction issued from the outdoor controller 90 in the indoor unit B1.

Although the DC voltage Vq of the power-supply lines P2 and N2 on the auxiliary power supply 40 side is sufficient for the operations of the indoor controller 70 and flow regulating valve 10, the DC voltage Vq is insufficient for the purpose of causing the indoor fan motor 11M to operate in addition to the indoor controller 70 and flow regulating valve 10. If the indoor fan motor 11M is made to operate, the operating power for the indoor controller 70 and flow regulating valve 10 becomes insufficient, and there is a possibility of the appropriate operations of the indoor controller 70 and flow regulating valve 10 becoming hard to be carried out. Furthermore, in the state where the electric power is supplied from the auxiliary power supply 40, since the indoor unit B1 is in the off-state, power distribution to the remote controller 22 is useless.

Thus, it is made a rule, when the circuit breaker 31 is subjected to an opening operation, to forbid the operation of the indoor fan motor 11M, and stop the supply of electric power to the remote controller 22 by turning off the NPN transistor 68. Thereby, it is possible to securely execute the procedure necessary for the oil recovery operation in the indoor unit B1 without causing a shortage of the operating power. The liability of the oil recovery operation is improved.

Although the control of the indoor controller 70 of the indoor unit B1 has been described so far, the indoor controller 70 of each of the other indoor units B2 to B6 executes the same control.

It should be noted that in the above-mentioned embodiment, although the description has been given by taking the case where the outdoor unit A includes one compressor 1 as an example, when the outdoor unit A includes a plurality of compressors 1 connected in parallel with each other, the above-mentioned embodiment can be implemented in the same manner. In the above-mentioned embodiment, although the description has been given by taking the case where the outdoor unit A includes one outdoor heat exchanger 3 as an example, when the outdoor A includes a plurality of outdoor heat exchangers 3 connected in parallel with each other, the above-mentioned embodiment can be implemented in the same manner.

In the above-mentioned embodiment, although the description has been given by taking the case where the AC voltage of the auxiliary power supply 40 is supplied to the indoor units B1 to B6 through the circuit breaker 41 as an example, the circuit breaker 41 is not an indispensable configuration requirement. The configuration in which the AC voltage of the auxiliary power supply 40 is directly supplied to the indoor units B1 to B6 without the aid of the circuit breaker 41 is also allowable.

Further, in this embodiment, the fact that the circuit breaker 31 has been subjected to the opening operation is detected on the grounds that the phototransistor 84b of the photo-coupler 84 is in the on-state on the basis of the state where the DC voltage Vq of the power-supply lines P2 and N2 on the auxiliary power supply 40 side is applied to the power-supply lines P1 and N1. In order to execute this detection, it is necessary to make the DC voltage Vq on the auxiliary power supply 40 side lower than the DC voltage Vp on the main power supply 30 side. In the above-mentioned embodiment, the AC voltage of the auxiliary power supply 40 is made 50V and, furthermore, the output voltage of the booster circuit 83 on the subsequent stage thereof is set to 140V, whereby the DC voltage Vq is made lower than the DC voltage Vp. Here, when the AC voltage of the auxiliary power supply 40 is equal to or greater than the AC voltage of the main power supply 30, it is sufficient if a step-down circuit configured to make the output voltage Vq less than the DC voltage Vp on the main power supply 30 side is provided in place of the booster circuit 83. However, it is necessary that the output voltage Vq of the DC output circuit 80x should be greater than or equal to at least a value that enables the power circuit 64 to output the normal voltages.

Furthermore, it is also allowable to remove the photo-coupler 84, provide a photo-coupler functioning as current detecting means or voltage detecting means in the same manner on the preceding stage of the rectifier circuit 61, detect that the photo-coupler enters the off-state by means of the indoor controller 70 on the basis of the fact that a current becomes unable to flow from the main power supply 30 to the rectifier circuit 61, and thereby detect that the circuit breaker 31 has been subject to an "opening" operation.

While certain embodiments have been described, these embodiments have been presented by way of example only, and are not intended to limit the scope of the inventions. Indeed, the novel embodiments and modifications described herein may be embodied in a variety of other forms; furthermore, various omissions, substitutions and changes in the form of the embodiments and modifications described herein may be made within the scope of the appended claims.

### Industrial Applicability

The air conditioning apparatus of the embodiment of the present invention can be used in areas in which it is made a practice (custom) or obligation to arrange circuit breakers in the power distribution paths between the AC power supply and indoor units, and subject a circuit breaker corresponding to an indoor unit out of operation to a breaker opening operation to thereby cut off supply of electric power to the indoor unit.

## Claims

1. An air conditioning apparatus comprising:
an outdoor unit (A) accommodating therein a compressor (1) and an outdoor heat exchanger (3);
indoor units (B1, B2, B3, B4, B5, B6) each of which accommodates therein a flow regulating valve (10), an indoor heat exchanger (12), and an indoor fan (11) configured to pass indoor air through the indoor heat exchanger (12); and
remote controllers (22) each connected to the indoor units (B1, B2, B3, B4, B5, B6) and configured to set operating conditions, wherein
the indoor units (B1, B2, B3, B4, B5, B6) include
a rectifier circuit (60) configured to rectify an AC voltage supplied from a main power supply (30) to each of the indoor units (B1, B2, B3, B4, B5, B6) through circuit breakers (31),
first power-supply lines (P1, N1) to which an output voltage of the rectifier circuit (60) is applied,
a DC output circuit (80x) configured to rectify an AC voltage supplied from an auxiliary power supply (40) to each of the indoor units (B1, B2, B3, B4, B5, B6) and output a voltage lower than an output voltage of the rectifier circuit (60),
second power-supply lines (P2, N2) configured to guide an output voltage of the DC output circuit (80x) to the first power-supply lines (P1, N1),
a first drive circuit (63) configured to drive the indoor fan (11) by the voltage of the first power-supply lines (P1, N1),
a power circuit (64) configured to create DC voltages of predetermined levels from the voltage of the first power-supply lines (P1, N1),
a second drive circuit (67) configured to drive the flow regulating valve (10) by the output voltage of the power circuit (64), and
an indoor controller (70) operating by the output voltage of the power circuit (64) and configured to control the first drive circuit (63) and the second drive circuit (67) according to the operating condition set by the remote controller (22) and an instruction from the outdoor unit (A), and carry out drive of the second drive circuit (67) according to the instruction from the outdoor unit (A) even when the output voltage of the rectifier circuit (60) is zero
**characterized by** comprising:
an outdoor controller (90) accommodated in the outdoor unit (A), connected to the indoor controllers (70) through communication lines (50), and configured to control the compressor (1) according to an instruction from each of the indoor controllers (70) based on the operating conditions to be set by the remote controllers (22);
current detecting units (84) provided in each of the indoor units (B1, B2, B3, B4, B5, B6), each of which is configured to detect a current flowing from the second power-supply lines (P2, N2) to the first power-supply lines (P1, N1); and
feed control switches (68)in each of the indoor units (B1, B2, B3, B4, B5, B6), each of which is configured to control feeding of electric power from the power circuit (64) to the remote controllers (22), wherein
the indoor controllers (70) control the first drive circuit (63) and the second drive circuit (67) according to the operating conditions set by the remote controllers (22) and an instruction from the outdoor controller (90), detect an opened/closed state of the circuit breakers (31) from a detection result of the current detecting units (84), and when the detection result is "closed", allow the first drive circuit (63) to operate the indoor fan (11) and turn on the feed control switches (68), and further when the detection result is "opened", forbid the first drive circuit (63) to operate the indoor fans (11) and turn off the feed control switches (68).

2. The air conditioning apparatus of Claim 1, **characterized in that**
the DC output circuits (80x) include a rectifier circuit (81) configured to rectify an AC voltage to be supplied to each of the indoor units (B1, B2, B3, B4, B5, B6) from the auxiliary power supply (40) supplying an AC voltage lower than the main power supply (30), and a booster circuit (83) configured to boost an output voltage of the rectifier circuit (81) to a DC voltage of a predetermined level lower than an output voltage of the first rectifier circuit (60).

## Patentansprüche

1. Klimaanlage aufweisend:
eine Außeneinheit (A), in der ein Kompressor (1) und ein Außenwärmetauscher (3) untergebracht sind;
Inneneinheiten (B1, B2, B3, B4, B5, B6), von denen jede darin ein Strömungsregelventil (10), einen Innenwärmetauscher (12) und ein Innengebläse (11) aufnimmt, das so konfiguriert ist, dass es Innenluft durch den Innenwärmetauscher (12) leitet; und
Fernsteuerungen (22), die jeweils mit den Inneneinheiten (B1, B2, B3, B4, B5, B6) verbunden und zum Einstellen von Betriebsbedingungen konfiguriert sind, wobei
die Inneneinheiten (B1, B2, B3, B4, B5, B6) umfassen
eine Gleichrichterschaltung (60), die so konfiguriert ist, dass sie eine Wechselspannung gleichrichtet, die von einer Hauptstromversorgung (30) an jede der Inneneinheiten (B1, B2, B3, B4, B5, B6) über Leistungsschalter (31) geliefert wird,
erste Stromversorgungsleitungen (P1, N1), an die eine Ausgangsspannung der Gleichrichterschaltung (60) angelegt wird,
eine Gleichstromausgangsschaltung (80x), die so konfiguriert ist, dass sie eine von einer Hilfsstromversorgung (40) an jede der Inneneinheiten (B1, B2, B3, B4, B5, B6) gelieferte Wechselspannung gleichrichtet und eine Spannung ausgibt, die niedriger als eine Ausgangsspannung der Gleichrichterschaltung (60) ist,
zweite Stromversorgungsleitungen (P2, N2), die so konfiguriert sind, dass sie eine Ausgangsspannung der Gleichstromausgangsschaltung (80x) zu den ersten Stromversorgungsleitungen (P1, N1) führen,
eine erste Treiberschaltung (63), die so konfiguriert ist, dass sie das Innengebläse (11) durch die Spannung der ersten Stromversorgungsleitungen (P1, N1) antreibt,
eine Leistungsschaltung (64), die so konfiguriert ist, dass sie Gleichspannungen mit vorbestimmten Pegeln aus der Spannung der ersten Stromversorgungsleitungen (P1, N1) erzeugt,
eine zweite Treiberschaltung (67), die so konfiguriert ist, dass sie das Strömungsregelventil (10) durch die Ausgangsspannung der Leistungsschaltung (64) ansteuert, und
eine Innenraum-Steuerung (70), die mit der Ausgangsspannung der Leistungsschaltung (64) betrieben wird und so konfiguriert ist, dass sie die erste Treiberschaltung (63) und die zweite Treiberschaltung (67) entsprechend der von der Fernsteuerung (22) eingestellten Betriebsbedingung und einem Befehl von der Außeneinheit (A) steuert und den Antrieb der zweiten Treiberschaltung (67) entsprechend dem Befehl von der Außeneinheit (A) ausführt, selbst wenn die Ausgangsspannung der Gleichrichterschaltung (60) Null ist
**gekennzeichnet durch**:
eine Außensteuereinheit (90), die in der Außeneinheit (A) untergebracht ist, mit den Innenraum-Steuerungen (70) über Kommunikationsleitungen (50) verbunden ist und so konfiguriert ist, dass sie den Kompressor (1) gemäß einer Anweisung von jeder der Innenraum-Steuerungen (70) auf der Grundlage der von den Fernsteuerungen (22) einzustellenden Betriebsbedingungen steuert;
Stromerfassungseinheiten (84), die in jeder der Innenraumeinheiten (B1, B2, B3, B4, B5, B6) vorgesehen sind, von denen jede konfiguriert ist, einen Strom zu erfassen, der von den zweiten Stromversorgungsleitungen (P2, N2) zu den ersten Stromversorgungsleitungen (P1, N1) fließt; und
Einspeisungssteuerschalter (68) in jeder der Inneneinheiten (B1, B2, B3, B4, B5, B6), von denen jeder so konfiguriert ist, dass er die Einspeisung elektrischer Energie von dem Stromkreis (64) zu den Fernsteuerungen (22) steuert, wobei
die Innenraum-Steuerungen (70) die erste Treiberschaltung (63) und die zweite Treiberschaltung (67) gemäß den von den Fernsteuerungen (22) eingestellten Betriebsbedingungen und einer Anweisung von der Außensteuerung (90) steuern, einen geöffneten/geschlossenen Zustand der Leistungsschalter (31) aus einem Erfassungsergebnis der Stromerfassungseinheiten (84) erkennen, wenn das Erfassungsergebnis "geschlossen" ist, der ersten Treiberschaltung (63) erlauben, das Innengebläse (11) zu betreiben und die Einspeisungssteuerschalter (68) einzuschalten, und wenn das Erfassungsergebnis "geöffnet" ist, der ersten Treiberschaltung (63) verbieten, das Innengebläse (11) zu betreiben und die Zufuhrsteuerschalter (68) ausschalten.

2. Klimaanlage nach Anspruch 1, **dadurch gekennzeichnet, dass** die Gleichstromausgangsschaltungen (80x) eine Gleichrichterschaltung (81) umfassen, die so konfiguriert ist, dass sie eine Wechselspannung gleichrichtet, die jeder der Innenraumeinheiten (B1, B2, B3, B4, B5, B6) von der Hilfsstromversorgung (40) zugeführt werden soll, die eine Wechselspannung liefert, die niedriger ist als die Hauptstromversorgung (30), und eine Boosterschaltung (83) enthalten, die so konfiguriert ist, dass sie eine Ausgangsspannung der Gleichrichterschaltung (81) auf eine Gleichspannung mit einem vorbestimmten Pegel erhöht, der niedriger ist als eine Ausgangsspannung der ersten Gleichrichterschaltung (60).

## Revendications

1. Appareil de climatisation comprenant :
une unité extérieure (A) dans laquelle sont reçus un compresseur (1) et un échangeur de chaleur extérieur (3) ;
des unités intérieures (B1, B2, B3, B4, B5, B6) dans chacune d'entre elles sont reçus une soupape de régulation d'écoulement (10), un échangeur de chaleur intérieur (12), et un ventilateur intérieur (11) configuré pour faire passer l'air intérieur à travers l'échangeur de chaleur intérieur (12) ; et
des dispositifs de commande à distance (22) connectés chacun aux unités intérieures (B1, B2, B3, B4, B5, B6) et configurés pour définir des conditions de fonctionnement, dans lequel
les unités intérieures (B1, B2, B3, B4, B5, B6) comportent
un circuit redresseur (60) configuré pour redresser une tension en courant alternatif, CA, fournie par une alimentation électrique principale (30) à chacune des unités intérieures (B1, B2, B3, B4, B5, B6) à travers des disjoncteurs (31),
des premières lignes d'alimentation électrique (P1, N1) auxquelles une tension de sortie du circuit redresseur (60) est appliquée,
un circuit de sortie de courant continu, CC, (80x) configuré pour redresser une tension CA fournie par une alimentation électrique auxiliaire (40) à chacune des unités intérieures (B1, B2, B3, B4, B5, B6) et délivrer une tension inférieure à une tension de sortie du circuit redresseur (60),
des deuxièmes lignes d'alimentation électrique (P2, N2) configurées pour guider une tension de sortie du circuit de sortie CC (80x) vers les premières lignes d'alimentation électrique (P1, N1),
un premier circuit d'entraînement (63) configuré pour entraîner le ventilateur intérieur (11) par la tension des premières lignes d'alimentation électrique (P1, N1),
un circuit de puissance (64) configuré pour créer des tensions CC de niveaux prédéterminés à partir de la tension des premières lignes d'alimentation électrique (P1, N1),
un deuxième circuit d'entraînement (67) configuré pour entraîner la soupape de régulation d'écoulement (10) par la tension de sortie du circuit de puissance (64), et
un dispositif de commande intérieur (70) fonctionnant par la tension de sortie du circuit de puissance (64) et configuré pour commander le premier circuit d'entraînement (63) et le deuxième circuit d'entraînement (67) selon la condition de fonctionnement définie par le dispositif de commande à distance (22) et une instruction provenant de l'unité extérieure (A), et effectuer l'entraînement du deuxième circuit d'entraînement (67) selon l'instruction provenant de l'unité extérieure (A) même lorsque la tension de sortie du circuit redresseur (60) est nulle
**caractérisé en ce qu'**il comprend :
un dispositif de commande extérieur (90) reçu dans l'unité extérieure (A), connecté aux dispositifs de commande intérieurs (70) à travers des lignes de communication (50), et configuré pour commander le compresseur (1) selon une instruction provenant de chacun des dispositifs de commande intérieurs (70) sur la base des conditions de fonctionnement à définir par les dispositifs de commande à distance (22) ;
des unités de détection de courant (84) prévues dans chacune des unités intérieures (B1, B2, B3, B4, B5, B6), dont chacune est configurée pour détecter un courant circulant des deuxièmes lignes d'alimentation électrique (P2, N2) aux premières lignes d'alimentation électrique (P1, N1) ; et
des commutateurs de commande de flux (68) dans chacune des unités intérieures (B1, B2, B3, B4, B5, B6), dont chacune est configurée pour commander le flux de puissance électrique, du circuit de puissance (64) aux dispositifs de commande à distance (22), dans lequel
les dispositifs de commande intérieurs (70) commandent le premier circuit d'entraînement (63) et le deuxième circuit d'entraînement (67) selon les conditions de fonctionnement définies par les dispositifs de commande à distance (22) et une instruction provenant du dispositif de commande extérieur (90), détectent un état ouvert/fermé des disjoncteurs (31) à partir d'un résultat de détection des unités de détection de courant (84), et
lorsque le résultat de détection est "fermé", autorisent le premier circuit d'entraînement (63) à faire fonctionner le ventilateur intérieur (11) et allumer les commutateurs de commande de flux (68), et en outre
lorsque le résultat de détection est "ouvert", interdisent au premier circuit d'entraînement (63) de faire fonctionner le ventilateurs intérieurs (11) et désactiver les commutateurs de commande de flux (68).

2. Appareil de climatisation selon la revendication 1, **caractérisé en ce que**
les circuits de sortie CC (80x) comportent un circuit redresseur (81) configuré pour redresser une tension CA à fournir à chacune des unités intérieures (B1, B2, B3, B4, B5, B6) par l'alimentation électrique auxiliaire (40) fournissant une tension CA inférieure à l'alimentation électrique principale (30), et un circuit amplificateur (83) configuré pour amplifier une tension de sortie du circuit redresseur (81) à une tension CC d'un niveau prédéterminé inférieur à une tension de sortie du premier circuit redresseur (60).
